# EUROPÄISCHE PATENTSCHRIFT

(11) **EP 1 118 243 B1**
(45) Veröffentlichungstag und Bekanntmachung des Hinweises auf die Patenterteilung: **08.07.2009**
(21) Anmeldenummer: 99955780.4
(22) Anmeldetag: 23.09.1999
(51) Int. Cl.: H04Q 11/04, H04L 12/64

(54) **VERFAHREN ZUM VERBINDEN VON VERMITTLUNGSANLAGEN ÜBER EIN PAKET-ORIENTIERTES KOMMUNIKATIONSNETZ**
METHOD FOR CONNECTING EXCHANGES VIA A PACKET-ORIENTED COMMUNICATIONS NETWORK
PROCEDE POUR CONNECTER DES CENTRAUX TELEPHONIQUES PAR L'INTERMEDIAIRE D'UN RESEAU DE COMMUNICATION ORIENTE PAQUETS

(30) Priorität: 30.09.1998 DE 19845031
(43) Veröffentlichungstag der Anmeldung: 25.07.2001
(73) Patentinhaber: SIEMENS AKTIENGESELLSCHAFT, 80333 München (DE)
(72) Erfinder: FRAAS, Wolfgang, D-82515 Wolfratshausen (DE); HÜNLICH, Klaus, D-85467 Neuching (DE); WEHREND, Klaus, D-82223 Eichenau (DE)
(74) Vertreter: Fritzsche, Thomas
(86) Internationale Anmeldenummer: PCT/DE1999/003055
(87) Internationale Veröffentlichungsnummer: WO 2000/019764

(56) Entgegenhaltungen:
- EP-A- 0 827 305
- GB-A- 2 320 396

## Beschreibung

Aufgrund einer zunehmenden globalen Ausrichtung von Unternehmen nimmt die Nutzung von Telekommunikationsdiensten zur Übermittlung von Sprache und Daten ständig zu. Dies hat zur Folge, daß die durch diese Telekommunikationsdienste verursachten Kosten ständig steigen und zu einem erheblichen Kostenfaktor für die Unternehmen werden, die deshalb Möglichkeiten zur Reduzierung dieser Kosten suchen. Eine Möglichkeit Daten kostengünstig und weltweit übermitteln zu können, bieten globale Computernetzwerke, wie beispielsweise das 'Internet'.

In dem US-Patent 6,751,210 wird bereits ein Verfahren und eine Anordnung vorgeschlagen, durch welche eine Übermittlung von im Rahmen einer Sprachverbindung zu übermittelnden Daten über ein paket-orientiertes Kommunikationsnetz, wie beispielsweise dem 'Internet' ermöglicht wird. Hierzu sind die an einer Sprachverbindung beteiligten Vermittlungsanlagen jeweils über eine Internet-Anschlußeinheit - in der Literatur häufig mit 'Telephony Internet Server' TIS bezeichnet - mit dem 'Internet' verbunden. Eine Übermittlung der im Rahmen einer Sprachverbindung zu übermittelten Daten erfolgt dabei gemäß des RTP-Protokolls (Realtime Transport Protokoll) nach ITU-T Standard H.225.0 (International Telecommunication Union).

Erfolgt eine Übermittlung von komprimierten Sprachdaten - wie beispielsweise im Rahmen des Mobilfunks angewendet - so müssen diese komprimierten Sprachdaten auf der Senderseite vor einer Übermittlung über das 'Internet' in der Internet-Anschlußeinheit dekomprimiert, in das paket-orientierte Datenformat gemäß des RTP-Protokolls umgewandelt und anschließend für die Übermittlung wieder komprimiert werden. Des weiteren müssen die Daten auf der Empfängerseite dekomprimiert, in das ursprüngliche Datenformat umgewandelt und anschließend für die Weiterübermittlung wieder komprimiert werden. Diese häufige Kompression/Dekompression der Sprachdaten führt zu einer Verfälschung der ursprünglich übermittelten Sprachdaten auf der Empfängerseite, die unter Umständen hörbar ist und somit als störend empfunden werden kann.

Aus der Offenlegungsschrift GB-A-2 320 396 ist des weiteren ein Verfahren für eine Übermittlung von Sprachdaten über ein paket-orientiertes Kommunikationsnetz bekannt, bei dem senderseitig in Form von IP-Datenpakete ausgestaltete Daten für eine Datenübermittlung über das paket-orientierte Kommunikationsnetz in AAL-2-Datenpakete umgewandelt werden. Durch die Umwandlung der IP-Datenpakete in AAL-2-Datenpakete wird jedoch ebenfalls eine Verschlechterung der Sprachqualität in Kauf genommen.

Aufgabe der folgenden Erfindung ist es, ein Verfahren anzugeben, durch welches eine Sprachdatenübermittlung über ein paket-orientiertes Kommunikationsnetz ohne Verlust der Sprachqualität ermöglicht wird.

Die Lösung der Aufgabe erfolgt erfindungsgemäß mit den Merkmalen des Patentanspruchs 1.

Ein wesentlicher Vorteil des erfindungsgemäßen Verfahrens besteht darin, daß durch eine Substrukturierung der für eine Datenübermittlung über das paket-orientierte Kommunikationsnetz eingerichteten Datenpakete in sogenannte Substruktur-Elemente, innerhalb eines Datenpakets unterschiedlichen Zielen zugeordnete Daten übermittelt werden können.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch die Übermittlung einer individuell einstellbaren Anzahl von einer Sprachverbindung zugeordneten Nutzdaten-Bytes in einem Substruktur-Element eines Datenpakets eine Datenübermittlung mit einer variablen Übertragungsrate realisierbar ist. Dies ermöglicht die Verwendung von Kompressionsalgorithmen, die aus einem kontinuierlichen Datenstrom in Abhängigkeit von der in den zu übermittelnden Daten vorhandenen Redundanz einen variablen Datenstrom ohne Verfälschung der Information erzeugen.

Ein weiterer Vorteil von in den Unteransprüchen definierten Ausgestaltungen der Erfindung besteht darin, daß durch die Definition des ersten Nutzdaten-Segments eines Datenpaketes als Zeiger, der die Anfangsadresse eines ersten im Nutzdatenbereich des Datenpaketes befindlichen Substruktur-Elementes bezeichnet, eine Synchronisierung der Vermittlungsanlagen bei einem Verlust einer oder mehrerer Datenpakete auf einfache Weise realisierbar ist.

Ein Ausführungsbeispiel der Erfindung wird im folgenden anhand der Zeichnung näher erläutert.

Dabei zeigen:
- Fig. 1:: ein Strukturbild zur schematischen Darstellung von zwei über ein paket-orientiertes Kommunikationsnetz verbundenen Vermittlungsanlagen;
- Fig. 2:: ein Strukturbild zur schematischen Darstellung von in Substruktur-Elemente untergliederten IP-Datenpaketen gemäß eines ersten Umwandlungsmodus;
- Fig. 3:: ein Strukturbild zur schematischen Darstellung von in Substruktur-Elemente untergliederten IP-Datenpaketen gemäß eines zweiten Umwandlungsmodus.

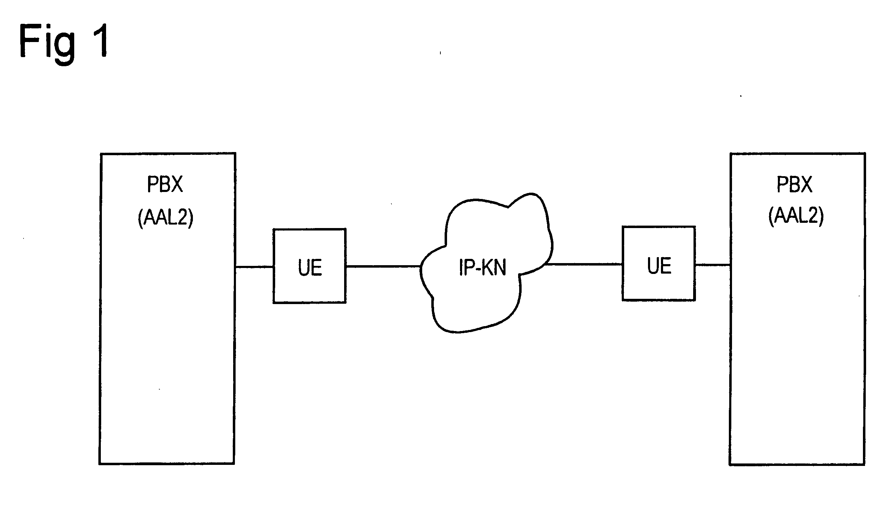

Fig. 1 zeigt in einer schematischen Darstellung zwei Vermittlungsanlagen PBX, die jeweils über eine Umwandlungseinheit UE mit einem IP-orientierten (Internet Protokoll) Kommunikationsnetz IP-KN verbunden sind. Beispiele für Datennetze, in denen vorzugsweise IP-Protokolle eingesetzt werden, sind das sogenannte 'Ethernet' gemäß IEEE-Standard 802.3 oder der so' genannte 'Tokenring' gemäß IEEE-Standard 802.5 (Institute of Electrical and Electronics Engineers). Durch die Umwandlungseinheiten UE erfolgt einerseits eine Verbindung der Vermittlungsanlagen PBX mit dem IP-orientierten Kommunikationsnetz IP-KN und andererseits eine bidirektionale Umwandlung zwischen dem vermittlungsanlageninternen Datenformat und dem Datenformat des IP-orientierten Kommunikationsnetzes IP-KN.

Eine vermittlungsanlageninterne Datenübermittlung und Vermittlung erfolgt dabei auf Basis von Substruktur-Elementen SE des ATM-Datenformats (Asynchroner Transfer Modus) gemäß der sogenannten ATM-Anpassungsschicht AAL-Tpy2 (ATM Adaption Layer). Die ATM-Anpassungsschicht AAL dient dabei einer Anpassung des ATM-Datenformats auf die Vermittlungsschicht (Schicht 3) des OSI-Referenzmodells (Open System Interconnection).

Eine bidirektionale Umwandlung zwischen dem in Substruktur-Elemente SE gegliederten Datenformat und dem IP-orientierten Datenformat erfolgt durch die Umwandlungseinheiten UE gemäß zweier unterschiedlicher Umwandlungsmodi, die im weiteren näher erläutert werden.

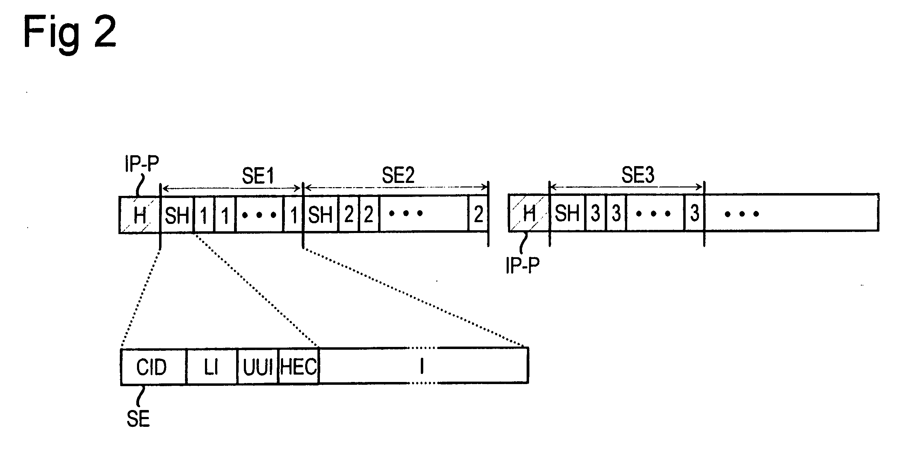

Fig. 2 zeigt eine schematische Darstellung von in Substruktur-Elemente SE untergliederten IP-Datenpaketen IP-P gemäß eines ersten Umwandlungsmodus. Ein IP-Datenpaket IP-P setzt sich aus einem Paketkopf H und einem Nutzdatenfeld mit einer variablen Länge von 1 - 65536 Byte zusammen. Im Paketkopf H sind im wesentlichen Vermittlungsdaten, wie z.B. die Ziel- und die Ursprungsadresse eines IP-Datenpakets IP-P gespeichert.

Ein Substruktur-Element SE setzt sich aus einem 3 Bytes langem Zellkopf SH und einem Nutzdatenbereich I variabler Länge (0 bis 64 Byte) zusammen. Der Zellkopf eines Substruktur-Elementes SE untergliedert sich wiederum in eine 8 Bit lange Kanal-Identifizierung CID (Channel Identifier), eine 6 Bit lange Längen-Identifizierung LI (Length Indicator), eine 5 Bit lange Sender-Empfänger-Identifizierung UUI (User-to-User Indication) und eine 5 Bit lange Zellkopf-Kontrollsumme HEC (Header Error Control). Durch die Kanal-Identifizierung CID besteht die Möglichkeit ein Substruktur-Element SE einer bestimmten Verbindung über das IP-orientierte Kommunikationsnetz IP-KN zuzuordnen und somit unterschiedlichen Verbindungen zugeordnete Daten in einem IP-Datenpaket zu übermitteln.

Die Substruktur-Elemente SE werden gemäß des ersten Umwandlungsmodus derart in das Nutzdatenfeld eines IP-Datenpakets IP-P eingefügt, daß das erste Byte des Nutzdatenfeldes mit einem Zellkopf SH eines Substruktur-Elementes SE belegt wird und das letzte Byte des Nutzdatenfeldes mit dem letzten Byte eines Substruktur-Elementes SE abschließt. Das bedeutet, daß die Länge des Nutzdatenfeldes eines IP-Datenpakets IP-P so gewählt wird, daß ein oder mehrere Substruktur-Elemente SE vollständig in einem IP-Datenpaket IP-P übermittelt werden. Beispielhaft werden in der Figur zwei Substruktur-Elemente SE1, SE2 vollständig in einem ersten IP-Datenpaket IP-P und ein Substruktur-Element SE3 in einem zweiten IP-Datenpaket IP-P übermittelt.

Für den Fall, daß ein oder mehrere IP-Datenpakete IP-P, z.B. durch einen Übertragungsfehler verloren gegangen sind, ist mittels der Längen-Identifizierung LI des ersten im Nutzdatenfeld eines IP-Datenpakets IP-P übermittelten Substruktur-Elementes SE eine Synchronisation zwischen Sender und Empfänger möglich, da durch diese Längen-Identifizierung LI die Lage von eventuell im Nutzdatenfeld angeordneter weiteren Substruktur-Elemente SE ermittelt werden kann.

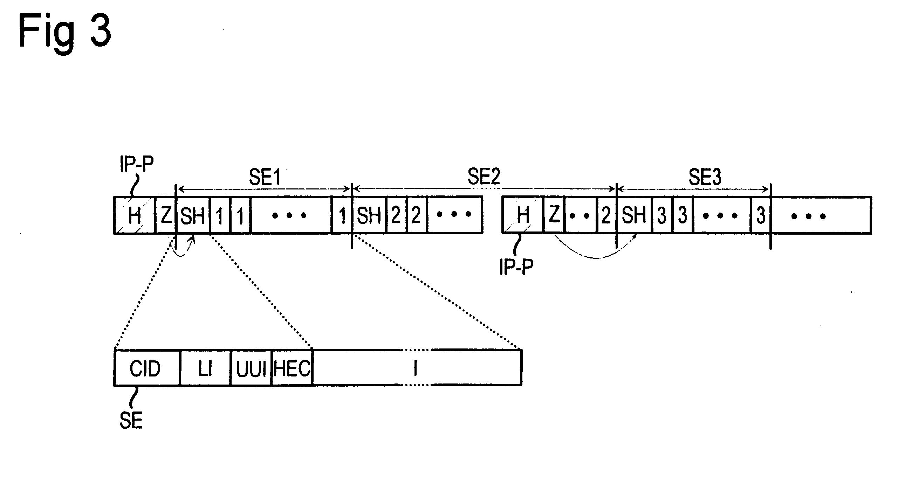

Fig. 3 zeigt eine schematische Darstellung von in Substruktur-Elemente SE untergliederten IP-Datenpaketen IP-P gemäß eines zweiten Umwandlungsmodus. Gemäß des zweiten Umwandlungsmodus können Substruktur-Elemente SE auch auf Nutzdatenfelder mehrerer IP-Datenpakete IP-P aufgeteilt werden. In der Figur beispielhaft für das Substruktur-Element SE2 dargestellt. Dies hat zur Folge, daß das Nutzdatenfeld eines IP-Datenpakets IP-P nicht mehr zwingend mit einem Zellkopf SH eines Substruktur-Elementes SE beginnen muß, so daß bei einem Verlust eines oder mehrerer IP-Datenpakete eine Synchronisation von Sender und Empfänger durch die Längen-Identifizierung LI eines Substruktur-Elementes SE nicht mehr möglich ist.

Hierzu wird das erste Byte des Nutzdatenfeldes eines IP-Datenpakets IP-P als Zeiger Z definiert. Eine Übermittlung der Substruktur-Elemente SE erfolgt somit erst mit dem zweiten Byte des Nutzdatenfeldes eines IP-Datenpakets IP-P. Dieser Zeiger Z gibt die Anfangsadresse des ersten Substruktur-Elementes SE an, dessen Zellkopf SH im Nutzdatenfeld eines IP-Datenpakets IP-P liegt. Mittels dieses Zeigers Z ist somit eine Wiederherstellung der Synchronisation zwischen Sender und Empfänger möglich.

Im Rahmen einer Datenübermittlung von einer sendenden Vermittlungsanlage PBX zu einer empfangenden Vermittlungsanlage PBX werden die zu übermittelnden Daten von der sendenden Vermittlungsanlage PBX in Form von Substruktur-Elementen SE an die der Vermittlungsanlage PBX zugeordnete Umwandlungseinheit UE übermittelt. In der Umwandlungseinheit UE werden die Substruktur-Elemente SE gemäß des ersten bzw. des zweiten Umwandlungsmodus in Datenpakete IP-P eingefügt, wobei die Datenpakete IP-P im Paketkopf H die IP-Adresse der, der empfangenden Vermittlungsanlage PBX zugeordneten Umwandlungseinheit UE aufweisen. Anschließend werden die Datenpakete IP-P über das IP-orientierte Kommunikationsnetz IP-KN an die, der empfangenden Vermittlungsanlage PBX zugeordneten Umwandlungseinheit UE übermittelt. Diese Umwandlungseinheit UE extrahiert die in den empfangenen Datenpaketen IP-P enthaltenen Substruktur-Elemente SE und leitet die extrahierten Substruktur-Elemente SE an die empfangende Vermittlungsanlage PBX weiter.

Durch eine Übermittlung von in Substruktur-Elementen SE gemäß der ATM-Anpassungsschicht AAL-Typ2 zusammengefaßten Daten über das IP-orientierte Kommunikationsnetz IP-KN entfällt eine bidirektionale Umwandlung zwischen dem in Substruktur-Elemente SE gegliederten Datenformat und dem üblicherweise für eine Übermittlung von Sprachdaten über das IP-orientierte Kommunikationsnetz IP-KN verwendete RTP-Datenformat. Zusätzlich entfällt auch die damit verbundene Kompression/Dekompression der Daten durch die Vermittlungsanlagen PBX, bzw. durch die an den Vermittlungsanlagen PBX angeschlossenen Internet-Anschlußeinheiten. Somit ist eine auf Substruktur-Elementen SE basierende Übermittlung von Sprachdaten über ein IP-orientiertes Kommunikationsnetz IP-KN von Sender zu Empfänger ohne Verlust der Sprachqualität durch mehrmalige Kompression und Dekompression der zu übermittelnden Sprachdaten möglich, da die Sprachdaten transparent, d.h. ohne Bearbeitung in den Substruktur-Elementen SE über das IP-orientierte Kommunikationsnetz IP-KN übermittelt werden.

## Patentansprüche

1. Verfahren zum Verbinden von Vermittlungsanlagen (PBX) über ein paket-orientiertes Kommunikationsnetz (IP-KN),
bei dem für eine Datenübermittlung in Substruktur-Elemente (SE) untergliederte Datenpakete (IP-P) eingerichtet sind, und die Vermittlungsanlagen (PBX) über jeweils eine Umwandlungseinrichtung (UE) mit dem paket-orientierten Kommunikationsnetz (IP-KN) verbunden sind,
wobei eine sendende Vermittlungsanlage (PBX) die zu übermittelnden Daten in Form von Substruktur-Elementen (SE) an die ihr zugeordnete Umwandlungseinrichtung (UE) übermittelt, welche die Substruktur-Elemente (SE) unverändert in Datenpakete (IP-P) einfügt, und
wobei die einer empfangenden Vermittlungsanlage (PBX) zugeordnete Umwandlungseinrichtung (UE) die Substruktur-Elemente (SE) aus den empfangenen Datenpaketen (IP-P) extrahiert und die extrahierten Substruktur-Elemente (SE) unverändert an die empfangende Vermittlungsanlage (PBX) weiterleitet.

2. Verfahren nach Anspruch 1,
**gekennzeichnet dadurch,**
**daß** die Datenpakete (IP-P) als IP-Datenpakete (Internet Protokoll) strukturiert sind.

3. Verfahren nach einem der vorhergehenden Ansprüche,
**gekennzeichnet dadurch,**
**daß** die Substruktur-Elemente (SE) jeweils einen Zellkopf (SH) aufweisen,
in dem ein Kanalidentifikator (CID) zur Bezeichnung einer Zuordnung der Substruktur-Elemente (SE) zu einem Übermittlungsziel gespeichert wird, und
in dem eine Längeninformation (LI) zur Angabe der Anzahl von in einem Substruktur-Element (SE) übermittelten Nutzdaten-Segmenten gespeichert wird.

4. Verfahren nach einem der vorhergehenden Ansprüche,
**gekennzeichnet dadurch,**
**daß** die Substruktur-Elemente (SE) gemäß des ATM-Datenformats (Asynchroner Transfer Modus) nach einer, als zweite ATM-Anpassungsschicht AAL-Typ2 (ATM Adaption Layer) bekannten Vereinbarung strukturiert sind.

5. Verfahren nach einem der vorhergehenden Ansprüche,
**gekennzeichnet dadurch,**
**daß** für die Datenübermittlung die Substruktur-Elemente (SE) in einem Nutzdatenbereich eines Datenpaketes (IP-P) derart angeordnet sind, daß in einem als erstes Nutzdaten-Segment des IP-Datenpakets (IP-P) definierten Segment ein Substruktur-Element (SE) beginnt.

6. Verfahren nach einem der Ansprüche 1 bis 4,
**gekennzeichnet dadurch,**
**daß** in einem als erstes Nutzdaten-Segment eines IP-Datenpakets (IP-P) definierten Segment ein Zeiger (Z) definiert ist, mit dem die Anfangsadresse des ersten im Nutzdatenbereich eines IP-Datenpakets (IP-P) befindlichen Substruktur-Elementes (SE) bezeichnet wird.

## Claims

1. Method for connecting exchanges (PBX) via a packet-oriented communication network (IP-KN),
in which data transmission involves data packets (IP-P) subdivided into substructure elements (SE) being set up, and the exchanges (PBX) are connected to the packet-oriented communication network (IP-KN) by means of a respective conversion device (UE),
where a transmitting exchange (PBX) transmits the data to be transmitted in the form of substructure elements (SE) to its associated conversion device (UE), which inserts the substructure elements (SE) into data packets (IP-P) unchanged, and
where the conversion device (UE) associated with a receiving exchange (PBX) extracts the substructure elements (SE) from the received data packets (IP-P) and forwards the extracted substructure elements (SE) to the receiving exchange (PBX) unchanged.

2. Method according to Claim 1,
**characterized**
**in that** the data packets (IP-P) are structured as IP data packets (Internet Protocol).

3. Method according to one of the preceding claims,
**characterized**
**in that** the substructure elements (SE) each have a cell header (SH)
which stores a channel identifier (CID) for denoting assignment of the substructure elements (SE) to a transmission destination, and
which stores an item of length information (LI) for indicating the number of useful data segments transmitted in a substructure element (SE).

4. Method according to one of the preceding claims,
**characterized**
**in that** the substructure elements (SE) are structured on the basis of the ATM data format (Asynchronous Transfer Mode) in accordance with an agreeement known as second ATM adaptation layer AAL Type 2 (ATM Adaptation Layer).

5. Method according to one of the preceding claims,
**characterized**
**in that,** for data transmission, the substructure elements (SE) are arranged in a useful data area of a data packet (IP-P) such that a substructure element (SE) starts in a segment defined as first useful data segment of the IP data packet (IP-P).

6. Method according to one of Claims 1 to 4,
**characterized**
**in that,** in a segment defined as first useful data segment of an IP data packet (IP-P), a pointer (Z) is defined which is used to denote the start address of the first substructure element (SE) situated in the useful data area of an IP data packet (IP-P).

## Revendications

1. Procédé pour relier des centraux de commutation (PBX) par l'intermédiaire d'un réseau de communication (IP-KN) orienté paquets, dans lequel des paquets de données (IP-P) subdivisés en éléments de sous-structure (SE) sont configurés pour une transmission de données et les centraux de commutation (PBX) sont reliés au réseau de communication (IP-KN) orienté paquets par l'intermédiaire de respectivement un dispositif de conversion (UE), un central de commutation (PBX) émetteur transmettant les données à transmettre sous la forme d'éléments de sous-structure (SE) au dispositif de conversion (UE) qui lui est associé, lequel insère les éléments de sous-structure (SE) non modifiés dans des paquets de données (IP-P) et le dispositif de conversion (UE) associé à un central de commutation (PBX) récepteur extrayant les éléments de sous-structure (SE) hors des paquets de données reçus (IP-P) et les éléments de sous-structure (SE) extraits étant retransmis non modifiés au central de commutation (PBX) récepteur.

2. Procédé selon la revendication 1, **caractérisé en ce que** les paquets de données (IP-P) sont structurés sous forme de paquets de données IP (Internet Protocol).

3. Procédé selon l'une des revendications précédentes, **caractérisé en ce que** les éléments de sous-structure (SE) comportent chacun un en-tête de cellule (SH), dans lequel est stocké un identificateur de canal (CID) pour la désignation d'une affectation des éléments de sous-structure (SE) à une destination de transmission et dans lequel est stockée une information de longueur (LI) pour l'indication du nombre de segments de données utiles transmis dans un élément de sous-structure (SE).

4. Procédé selon l'une des revendications précédentes, **caractérisé en ce que** les éléments de sous-structure (SE) sont structurés selon le format de données ATM (Asynchronous Transfer Mode) selon une convention connue sous forme de seconde couche d'adaptation ATM AAL-Typ2 (ATM Adaption Layer).

5. Procédé selon l'une des revendications précédentes, **caractérisé en ce que,** pour la transmission de données, les éléments de sous-structure (SE) sont disposés dans une zone de données utiles d'un paquet de données (IP-P) de telle sorte qu'un élément de sous-structure (SE) commence dans un segment défini comme premier segment de données utiles du paquet de données IP (IP-P).

6. Procédé selon l'une des revendications 1 à 4, **caractérisé en ce que,** dans un segment défini comme premier segment de données utiles d'un paquet de données IP (IP-P), on définit un indicateur (Z) avec lequel on désigne l'adresse initiale du premier élément de sous-structure (SE) qui se trouve dans la zone de données utiles d'un paquet de données IP (IP-P).
